# EUROPÄISCHE PATENTSCHRIFT

(11) **EP 2 509 532 B1**
(45) Veröffentlichungstag und Bekanntmachung des Hinweises auf die Patenterteilung: **19.02.2014**
(21) Anmeldenummer: 10790360.1
(22) Anmeldetag: 10.12.2010
(51) Int. Cl.: A61C 8/00

(54) **ZAHNIMPLANTAT**
DENTAL IMPLANT
IMPLANT DENTAIRE

(30) Priorität: 10.12.2009 DE 102009057754
(43) Veröffentlichungstag der Anmeldung: 17.10.2012
(73) Patentinhaber: Cera M GmbH, 97877 Wertheim (DE)
(72) Erfinder: LUTZ, Walter, 97877 Wertheim (DE); RIES, Stefan, 97877 Wertheim (DE)
(74) Vertreter: Zinnecker, Armin
(86) Internationale Anmeldenummer: PCT/EP2010/007537
(87) Internationale Veröffentlichungsnummer: WO 2011/069671

(56) Entgegenhaltungen:
- EP-A1- 1 529 498
- EP-A1- 1 728 486
- WO-A1-2006/035011
- DE-A1-102007 013 603

## Beschreibung

Die Erfindung betrifft ein Zahnimplantat, das eine Implantatschraube, einen Implantataufbau und eine Spannschraube umfaßt. Die Implantatschraube weist ein Außengewinde auf, mit dem sie in einen Kieferknochen einschraubbar ist. Der Implantataufbau wird mit der Implantatschraube gefügt und durch die Spannschraube an der Implantatschraube befestigt. An dem Implantataufbau ist ein Zahnersatz, eine Krone, eine Zahnkappe oder dergleichen unmittelbar oder mittelbar befestigbar oder befestigt. Die Spannschraube ist in die Implantatschraube einschraubbar oder eingeschraubt. Durch die Spannschraube ist der Implantataufbau mit der Implantatschraube verbindbar oder verbunden. Die Implantatschraube liegt mit einer Anlagefläche an einer Anlagefläche des Implantataufbaus an.

Ein derartiges Zahnimplantat ist aus der EP 1 529 498 A1 bekannt. Bei einer Ausführungsform der EP 1 529 498 A1 weist die Implantatschraube eine konische Anlagefläche auf und weist der Implantataufbau eine hierzu komplementäre konische Anlagefläche auf. Die relative Winkelposition zwischen der Implantatschraube und dem Implantataufbau ist bei dieser Ausführungsform nicht festgelegt.

Eine weitere Ausführungsform aus der EP 1 529 498 A1 umfaßt eine Implantatschraube, die einen Innensechskant aufweist, in den ein entsprechender Außensechskant an dem Implantataufbau eingreift, so daß der Implantataufbau in der Implantatschraube verdrehsicher und in einer vorbestimmten Winkelstellung gehalten ist.

Aus der EP 1 269 932 A1 ist ein Dentalimplantataufbau mit einer Implantatschraube aus Metall, nämlich Titan, und einem Implantataufbau aus Keramik bekannt. Die Implantatschraube und der Implantataufbau werden durch ein metallisches Verbindungsstück miteinander verbunden.

Aus der WO 01/50977 A1 ist ein weiteres Zahnimplantat bekannt.

Die WO 2009/009909 A1 offenbart ein Zahnimplantat mit einer Implantatschraube und einem Implantataufbau, die miteinander verschraubt und zusätzlich miteinander verklebt werden. Diese Verklebung führt zu erheblichen Mängeln sowohl im klinischen Gebrauch wie auch bei der Langzeitprognose des Gesamtsystems. Zum einen ist es äußerst schwierig, wenn nicht unmöglich, nach dem Verkleben die austretenden Kleberüberschüsse zuverlässig zu entfernen. Diese Kleberüberschüsse können zu Entzündungen am Implantatlager und in der Folge zum Implantatverlust führen. Zum anderen ist es manchmal erforderlich, auch nach dem Einsetzen der Restauration die Verbindung zwischen der Implantatschraube und dem Implantataufbau wieder zu trennen, was nach dem Verkleben beider Komponenten nur schwer oder überhaupt nicht möglich ist. Hinzu kommt, daß im Milieu der Mundhöhle die Beständigkeit eines Klebers nur schwer voraussagbar ist. Temperaturwechsel, Schwankungen des pH-Werts, mechanische Belastungen und Feuchtigkeit lassen insbesondere ehemals plastische Werkstoffe schnell altern.

Die DE 101 29 684 B4 zeigt ein weiteres Zahnimplantat.

Aus der EP 1 529 498 A1 ist ein Zahnimplantat nach dem Oberbegriff des Anspruchs 1 bekannt.

Die DE 10 2007 013603 A 1 offenbart ein weiteres Zahnimplantat.

Die Formgestaltung der Implantatschraube und/oder des Implantataufbaus können es mit sich bringen, daß bei bestimmten Werkstoffen, insbesondere bei Keramik oder einem keramikähnlichen Werkstoff oder einem Werkstoff, der Keramik oder einen keramikähnlichen Werkstoff enthält, aber auch bei Werkstoffen, die Kunststoff enthalten, in verschiedenen Bereichen dieser Bauteile verschieden umfangreiche Materialansammlungen vorhanden sind. Durch diese unterschiedlichen Materialvolumen kann es vorkommen, daß das fertige Bauteil nicht hinreichend maßhaltig ist. Diese Gefahr besteht insbesondere, wenn das Herstellungsverfahren einen Schrumpfungsprozeß beinhaltet, wie dies insbesondere beim Sintern von Keramik oder keramikhaltigen Werkstoffen der Fall ist, möglicherweise aber auch bei Werkstoffen, die Kunststoff enthalten. Im allgemeinen verläuft der Schrumpfungsprozeß insbesondere beim Sintern nicht linear. Das Material der Implantatschraube und/oder des Implantataufbaus kann also in verschiedenen Bereichen dieser Teile entsprechend der unterschiedlichen Materialvolumen in einem jeweils verschiedenen Ausmaß schrumpfen. Wenn die Implantatschraube und der Implantataufbau gefügt und durch die Spannschraube miteinander verspannt werden, ist deshalb ein vollständig spannungsfreier Formschluß der Fügeflächen nicht erreichbar. Hierdurch entstehen eine Bruchgefahr und/oder die Gefahr einer mangelnden Bakteriendichtheit. Diese Gefahren können unabhängig von dem erwähnten Schrumpfprozeß auch durch eine Oberflächenrauhigkeit des Werkstoffs entstehen.

Bei vorbekannten Versuchen führten keramische Anlageflächen zu weitreichenden Problemen. Fertigungsbedingte Ungenauigkeiten, selbst im Mikrometerbereich, führten dazu, daß es bei der Einleitung von Kräften zu Kraft- bzw. Spannungsspitzen im Material kam. Anders als bei metallischen Komponenten, die materialbedingt eine gewisse Elastizität bzw. Duktilität besitzen, sind keramische Werkstoffe spröde, wenig elastisch und so gut wie nicht verformbar. Mit den bisher angewandten Fertigungsmethoden konnte die Genauigkeit der Verbindung lediglich bis zu einem gewissen Grad gesteigert werden. Mikroskopisch kann hier allerdings nicht von einer "flächigen, homogenen" Anlagefläche gesprochen werden. Diese ist bislang eher punktuell vorhanden, in etwa vergleichbar mit einem Sandkorn unter einer plan aufliegenden Glasplatte. Spannungspitzen und daraus resultierende Frakturen einer oder beider Komponenten schon bei physiologisch auftretenden Kaukräften waren die Folge.

Aufgabe der Erfindung ist es, ein verbessertes Zahnimplantat vorzuschlagen.

Erfindungsgemäß wird diese Aufgabe durch die Merkmale des Anspruchs 1 gelöst. Das Zahnimplantat umfaßt eine Implantatschraube mit einem Außengewinde, einem Implantataufbau und eine Spannschraube, die in die Implantatschraube einschraubbar ist und durch die der Implantataufbau mit der Implantatschraube verbindbar oder verbunden ist. Die Implantatschraube liegt mit einer Anlagefläche an einer Anlagefläche des Implantataufbaus an. Die Implantatschraube und der Implantataufbau sind aus keramischem Werkstoff hergestellt. Sie sind zumindest im Bereich ihrer Anlageflächen aus einem keramischen Werkstoff hergestellt. Vorteilhaft ist es, wenn die Implantatschraube und/oder der Implantataufbau vollständig aus einem keramischen Werkstoff hergestellt sind.

Die Anlagefläche der Implantatschraube und die Anlagefläche des Implantataufbaus sind gegeneinander eingeschliffen. Die Anlageflächen können insbesondere so weit gegeneinander eingeschliffen werden, bis sie einen Formschluß bilden.

Durch die Erfindung wird es ermöglicht, ein zweiteiliges Zahnimplantat, also ein Zahnimplantat mit einer Implantatschraube und einem Implantataufbau, als vollke-ramisches Zahnimplantat zu realisieren. Dies bedeutet, daß sowohl die Implantatschraube als auch der Implantataufbau (das Abutment) aus einem keramischen Werkstoff bestehen. Zum Fügen der Implantatschraube und des Implantataufbaus sind, abgesehen von der Implanatschraube, keine metallischen Komponenten erforderlich. Zumindest die Anlageflächen der Implantatschraube und des Implantataufbaus bestehen aus Keramik.

Der Formschluß der aus Keramik bestehenden Anlageflächen wird dadurch erreicht, daß die Anlageflächen gegeneinander eingeschliffen sind. Auf diese Weise entsteht ein homogenes und flächiges Anlagerungsinterface, bei dem es zu keinen fertigungsbedingten Spannungen im Material kommen kann, so daß die Stabilität der Gesamtkonstruktion entscheidend verbessert wird.

Die Herstellung des Zahnimplantats wird vorzugsweise im Wege der sogenannten Paarung durchgeführt, bei der eine bestimmte Implantatschraube und ein bestimmter Implantataufbau mittels eines geeigneten Schleifmittels gegeneinander eingeschliffen werden. Durch dieses Verfahren können sämtliche Geometriefehler, die Spannungen erzeugen und bei entsprechender Belastung zu Bruch führen können, eleminiert werden, und es kann ein absoluter Formschluß der Implantatschraube und des Implantataufbaus erreicht werden.

Vorteilhafte Weiterbildungen sind in den Unteransprüchen beschrieben.

Vorteilhaft ist es, wenn die Anlagefläche der Implantatschraube und die Anlagefläche des Implantataufbaus konische Anlageflächen sind.

Stattdessen oder zusätzlich ist es allerdings auch möglich, daß die Anlagefläche der Implantatschraube eine axiale Anlagefläche und/oder eine weitere axiale Anlagefläche ist und/oder daß die Anlagefläche des Implantataufbaus eine axiale Anlagefläche und/oder eine weitere axiale Anlagefläche ist. Wenn bei einem Zahnimplantat wie beispielsweise demjenigen nach der EP 1 529 498 A1 alle auftretenden Kräfte zwischen der Implantatschraube und dem Implantataufbau durch konische Anlageflächen übertragen werden, kann dies zur Folge haben, daß bei einer axialen Belastung durch die Spannschraube und/oder durch äußere Krafteinwirkungen beim Kauen etc. radiale Kräfte erzeugt werden, die durch den konischen Anlagewinkel entsprechend verstärkt werden und die zum Bruch des Zahnimplantats führen können. Diese Gefahr ist umso größer, wenn die Implantatschraube und/oder der Implantataufbau aus spröden Materialien wie beispielsweise Keramik hergestellt sind, die nur eine geringe Bruchdehnung aufweisen. Wenn axiale Anlageflächen vorhanden sind, können axiale Kräfte, die auf das Zahnimplantat einwirken, zumindest auch über die axialen Anlageflächen übertragen werden, was zu einer Entlastung der konischen Anlageflächen führt. Hierdurch wird die Bruchgefahr bei axialen Belastungen des Zahnimplantats vermindert oder beseitigt.

Vorteilhaft ist es, wenn die axialen Anlageflächen an einem Ende der konischen Anlageflächen vorgesehen sind.

Nach einer weiteren vorteilhaften Weiterbildung sind an beiden Enden der konischen Anlageflächen axiale Anlageflächen vorgesehen.

Nach einer weiteren vorteilhaften Weiterbildung umfaßt das Zahnimplantat eine Positionierbuchse, die in der Implantatschraube verdrehsicher lagerbar oder gelagert ist und mit der der Implantataufbau verdrehsicher verbindbar oder verbunden ist. Bei dieser Lösung können die Implantatschraube und der Implantataufbau zunächst gegeneinander rotieren, so daß diese Teile insbesondere im Verfahren der Paarung gegeneinander eingeschliffen werden können. Danach wird die Positionierbuchse eingesetzt, die die Implantatschraube und den Implantataufbau verdrehsicher relativ zueinander positioniert.

Die Positionierbuchse kann eine verdrehsichere Außenfläche aufweisen. In entsprechender Weise kann die Implantatschraube eine verdrehsichere Innenfläche aufweisen. Die verdrehsichere Außenfläche und die verdrehsichere Innenfläche sind vorzugsweise zueinander komplementär. Geeignet sind alle Flächen, die eine Verdrehsicherung bewirken. Insbesondere kann die verdrehsichere Außenfläche als Außensechskant ausgebildet sein. Die verdrehsichere Innenfläche kann in diesem Fall als hierzu vorzugsweise komplementärer Innensechskant ausgebildet sein. Es ist allerdings auch möglich, daß anstelle eines Sechskants ein Vierkant, ein Achtkant oder ein Querschnitt mit einem sonstigen regelmäßigen oder unregelmäßigen Vieleck verwendet wird.

Eine weitere vorteilhafte Weiterbildung ist dadurch gekennzeichnet, daß die Positionierbuchse einen Vorsprung und der Implantataufbau eine dazu komplementäre Aussparung aufweist. Der Vorsprung ist vorzugsweise als Steg ausgebildet. Die Aussparung ist vorzugsweise als Nut ausgebildet. Es kann allerdings auch die umgekehrte Anordnung verwendet werden, bei der die Positionierbuchse eine Aussparung, insbesondere eine Nut, aufweist und der Implantataufbau einen dazu komplementären Vorsprung, insbesondere einen Steg, aufweist.

Vorteilhaft ist es, wenn der Vorsprung bzw. der Steg und die Aussparung bzw. die Nut konisch ausgeformt sind. Hierdurch kann eine noch bessere Positionierung gewährleistet werden. Insbesondere kann dadurch ein vollständiger Rotationsschutz auf einfachere Weise oder überhaupt ermöglicht werden. Dieser Rotationsschutz verhindert jegliche fertigungsbedingte Rotation. Dies wird einerseits durch die konisch ausgeformten, schrägen, also nicht parallelwandigen Flächen zwischen der Positionierbuchse und dem Implantataufbau erreicht oder begünstigt. Es wird ferner dadurch erreicht oder begünstigt, daß der Rotationsschutz durch ein separates, weder mit der Implantatschraube noch mit dem Implantataufbau fest verbundenen Teil, nämlich der Positionierbuchse, realisiert wird. Dies macht es möglich, daß die korrespondierenden Schrägflächen zwischen der Positionierbuchse und dem Implantataufbau nicht erst in der apikalen, also untersten Endposition des Implantataufbaus miteinander korrespondieren, sondern schon früher. So gelingt eine reproduzierbare Null-Grad-Rotation, was insbesondere bei Konstruktionen von Bedeutung ist, bei denen mehrere Implantate miteinander verbunden werden, insbesondere bei Brücken.

Die Erfindung betrifft ferner ein Verfahren zur Herstellung eines erfindungsgemäßen Zahnimplantats. Das erfindungsgemäße Verfahren ist dadurch gekennzeichnet, daß eine Anlagefläche der Implantatschraube und eine Anlagefläche des Implantataufbaus gegeneinander eingeschliffen werden.

Eine vorteilhafte Weiterbildung dieses Verfahrens ist dadurch gekennzeichnet, daß eine konische Anlagefläche der Implantatschraube und eine konische Anlagefläche des Implantataufbaus gegeneinander eingeschliffen werden. Stattdessen oder zusätzlich können eine axiale Anlagefläche der Implantatschraube und eine axiale Anlagefläche des Implantataufbaus gegeneinander eingeschliffen werden und/oder können eine weitere axiale Anlagefläche der Implantatschraube und eine weitere axiale Anlagefläche des Implantataufbaus gegeneinander eingeschliffen werden.

Vorteilhaft ist es, wenn eine oder mehrere oder alle Anlageflächen so weit gegeneinander eingeschliffen werden, bis sie einen Formschluß bilden.

Ausführungsbeispiele der Erfindung werden nachstehend anhand der beigefügten Zeichnung im einzelnen erläutert. In der Zeichnung zeigt
- Fig. 1: ein Zahnimplantat, bestehend aus einer Implantatschraube, einer Positionierbuchse, einem Implantataufbau und einer Spannschraube im demontierten Zustand in einer perspektivischen Ansicht,
- Fig. 2: die Bestandteile des Zahnimplantats gemäß Fig. 1 in einer Seitenansicht,
- Fig. 3: die Bestandteile des Zahnimplantats gemäß Fig. 1 und 2 in einer seitlichen Schnittansicht,
- Fig. 4: eine abgewandelte Ausführungsform des Zahnimplantats gemäß Fig. 1 bis 3 im montierten Zustand in einer seitlichen Schnittansicht und
- Fig. 5: die Einzelheit "C" aus Fig. 4 in einer vergrößerten Darstellung.

Das in der Zeichnung dargestellte Zahnimplantat umfaßt eine Implantatschraube 1, eine Positionierbuchse 2, einen Implantataufbau 3 und eine Spannschraube 4.

Die Implantatschraube 1 ist aus einem keramischen Werkstoff hergestellt. Sie weist ein Außengewinde 5 auf, mit dem es in einen Kieferknochen eingeschraubt werden kann, und einen zylindrischen Bereich 6, der an dem dem Implantataufbau 3 zugewandten Ende der Implantatschraube 1 vorgesehen ist. Im allgemeinen ragt der zylindrische Bereich 6 im eingeschraubten Zustand der Implantatschraube 1 teilweise aus dem Kieferknochen heraus. Sein Außendurchmesser entspricht dem größten Außendurchmesser des Implantataufbaus 3.

Die Implantatschraube 1 weist ferner ein inneres Sackloch 7 auf. Das innere Sackloch umfaßt ein Innengewinde 8, in das die Spannschraube 4 einschraubbar ist. Das Innengewinde 8 erstreckt sich annähernd bis zur unteren Endfläche 9 der Implantatschraube 1. Ferner umfaßt das innere Sackloch 7 eine konische Anlagefläche 10, die zur oberen Endfläche der Implantatschraube 1 hin geöffnet ist und die sich zur oberen Endfläche hin konisch erweitert. Die obere Endfläche der Implantatschraube 1 bildet eine axiale Anlagefläche 11. Die axiale Anlagefläche 11 ist eine Ringfläche.

An die konische Anlagefläche 10 schließt sich nach unten eine verdrehsichere Innenfläche 12 an. Die verdrehsichere Innenfläche 12 ist als Innensechskant ausgebildet. Die Diagonale des Innensechskants entspricht dem Durchmesser am unteren Ende der konischen Anlagefläche 10.

Der Implantataufbau 3 ist aus einem keramischen Werkstoff hergestellt. Er weist eine äußere konische Mantelfläche 13 auf, die sich nach oben erstreckt. An der äußeren konischen Mantelfläche 13 kann ein Zahnersatz oder dergleichen befestigt werden. Der Implantataufbau 3 weist ferner eine konische Anlagefläche 14 auf, die sich zum unteren Ende des Implantataufbaus 3 hin verjüngt. Die konische Anlagefläche 14 des Implantataufbaus 3 ist zur konischen Anlagefläche 10 der Implantatschraube 1 komplementär.

An das obere Ende der konischen Anlagefläche 14 des Implantataufbaus 3 schließt sich eine nach außen weisende Absatzfläche an, die eine axiale Anlagefläche 15 bildet. Die axiale Anlagefläche 15 erstreckt sich ferner vom unteren Ende der äußeren konischen Mantelfläche 13 nach innen. Sie ist eine Ringfläche.

An das untere Ende der konischen Anlagefläche 14 des Implantataufbaus 3 schließt sich die nach innen weisende untere Endfläche des Implantataufbaus 3 an, die eine weitere axiale Anlagefläche 33 bildet. Sie ist eine Ringfläche.

Der Implantataufbau 3 weist ein Durchgangsloch 16 auf, das einen oberen, im Durchmesser größeren Bereich 17 und einen unteren, im Durchmesser kleineren Bereich 18 umfaßt, die voneinander durch einen Absatz 19 getrennt sind.

Die Spannschraube 4 ist aus Metall hergestellt. Sie umfaßt einen Kopf 20, einen sich daran anschließenden Schaft 21 und ein sich daran anschließendes Gewindeteil 22. Das Gewindeteil 22 der Spannschraube 4 ist in das Innengewinde 8 der Implantatschraube 1 einschraubbar. Das dem Schaft 21 zugewandte Ende des Gewindeteils 22 ist mit 23 bezeichnet. Der Kopf 20 der Spannschraube 4 weist einen größeren Durchmesser als deren Schaft 21 auf. Der dadurch gebildete Absatz 25 liegt im montierten Zustand auf dem Absatz 19 im Durchgangsloch 16 des Implantataufbaus 3 auf. Der Absatz 25 wird gegen den Absatz 19 verspannt. In dem Kopf 20 ist ein Schlitz 20' oder eine anders geformte Aufnahme vorgesehen, in den oder die ein Werkzeug eingreifen kann, beispielsweise ein Schraubendreher.

Vor der Montage des Zahnimplantats werden die konische Anlagefläche 10 der Implantatschraube 1 und die konische Anlagefläche 14 des Implantataufbaus 3 im Wege der Paarung gegeneinander eingeschliffen. Bei diesem Vorgang werden die Implantatschraube 1 und der Implantataufbau 3 relativ zueinander gedreht. Durch das Einschleifen wird eine Spannungsfreiheit und Bakteriendichtheit erreicht. Vorteilhaft ist es, wenn die konischen Anlageflächen 10 und 14 so weit gegeneinander eingeschliffen werden, bis sie einen Formschluß bilden.

Ferner ist es vorteilhaft, wenn die konischen Anlageflächen 10 und 14 so weit gegeneinander eingeschliffen werden, bis die axiale Anlagefläche 11 der Implantatschraube 1 und die axiale Endfläche 15 des Implantataufbaus 3 aneinander anliegen und einen Formschluß bilden. Dadurch wird die Spannungsfreiheit und Bakteriendichtheit weiter verbessert.

Nach dem Einschleifen werden die Implantatschraube 1 und der Implantataufbau 3 voneinander getrennt. In die Implantatschraube 1 wird die Positionierbuchse 2 eingesetzt. Die Positionierbuchse 2 ist in der als Innensechskant ausgebildeten verdrehsicheren Innenfläche 12 der Implantatschraube 1 verdrehsicher gelagert. Hierzu weist die Positionierbuchse 2 eine als Außensechskant ausgebildete verdrehsichere Außenfläche 26 auf. Der Innensechskant der verdrehsicheren Innenfläche 12 entspricht dem Außensechskant der verdrehsicheren Außenfläche 26.

Ferner weist die Positionierbuchse 2 an ihrem oberen Ende einen Vorsprung 27 auf, der nach oben, also zum Implantataufbau 3 hin gerichtet ist. Der Vorsprung 27 ist als Steg ausgebildet. Er weist konische Außenflächen 28 auf.

Die Positionierbuchse 2 weist ferner ein Durchgangsloch 29 auf, durch das der Schaft 21 der Spannschraube 4 hindurchgesteckt werden kann. Der als Steg ausgebildete Vorsprung 27 befindet sich lediglich an einer Stelle der oberen Ringfläche der Positionierbuchse 2. An der gegenüberliegenden Seite der oberen Ringfläche der Positionierbuchse 2 könnte sich allerdings noch ein weiterer entsprechender Vorsprung befinden.

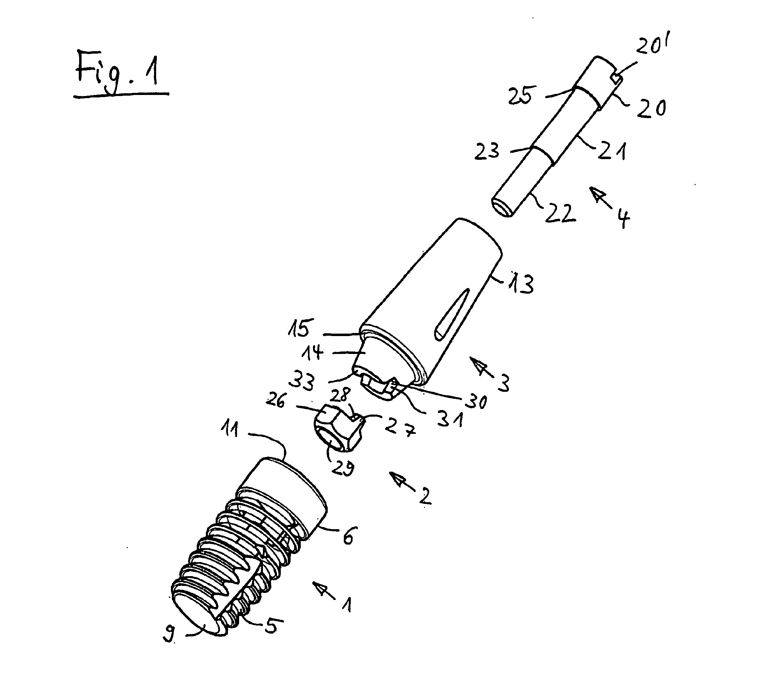

Der Implantataufbau 3 weist eine zu dem als Steg ausgebildeten Vorsprung 27 komplementäre Aussparung 30 auf. Die Aussparung 30 ist als Nut ausgebildet. Sie weist konische Außenflächen 31 auf, die den konischen Außenflächen 28 des als Steg ausgebildeten Vorsprungs 27 der Positionierbuchse 2 entsprechen. Die Aussparung 30 befindet sich am unteren, der Implantatschraube 1 zugewandten Ende des Implantataufbaus 3. Wie aus Fig. 1 ersichtlich sind in der unteren Ringfläche 33 des Implantataufbaus 3 zwei Aussparungen 30 vorhanden, die miteinander fluchten. Es würde allerdings auch ausreichen, wenn nur eine Aussparung 30 vorhanden wäre.

Die axiale Anlagefläche 11, die von der oberen Endfläche der Implantatschraube 1 gebildet wird, ist zur konischen Anlagefläche 10 hin abgerundet. Ferner ist die axiale Anlagefläche 11 auch zum zylindrischen Bereich 6 hin abgerundet. Die axiale Anlagefläche 15, die von der Absatzfläche am oberen Ende der konischen Anlagefläche 14 gebildet wird, ist zur konischen Anlagefläche 14 hin abgerundet. Ferner ist die axiale Anlagefläche 15 auch zur äußeren konischen Mantelfläche 13 hin abgerundet. Sowohl die axiale Anlagefläche 11 als auch die axiale Anlagefläche 15 verlaufen jeweils in radialer Richtung. Die Flächennormalen der axialen Anlagefläche 11 und der axialen Anlagefläche 15 verlaufen also jeweils in Längsrichtung des Zahnimplantats.

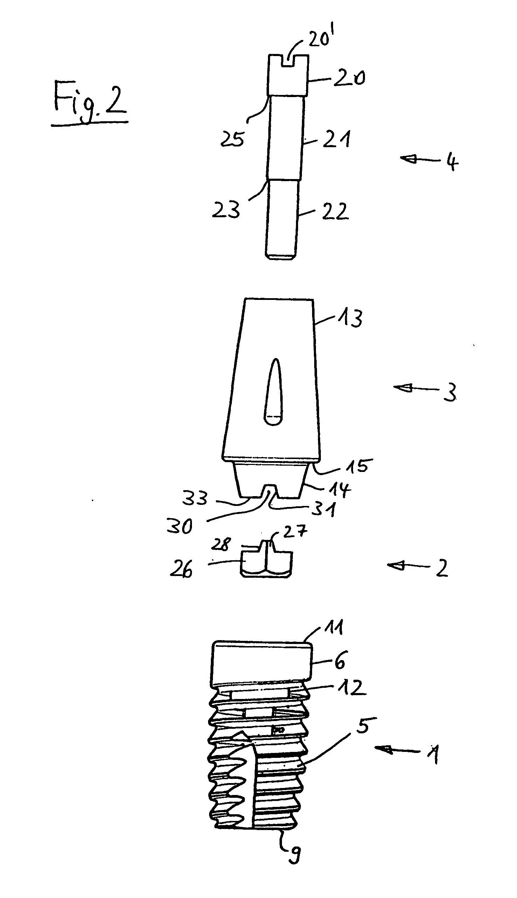

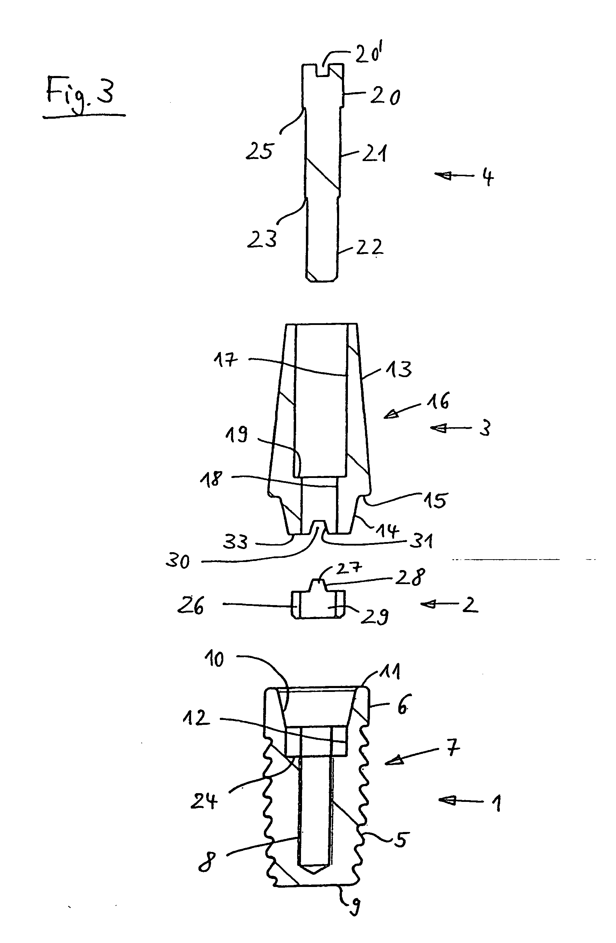

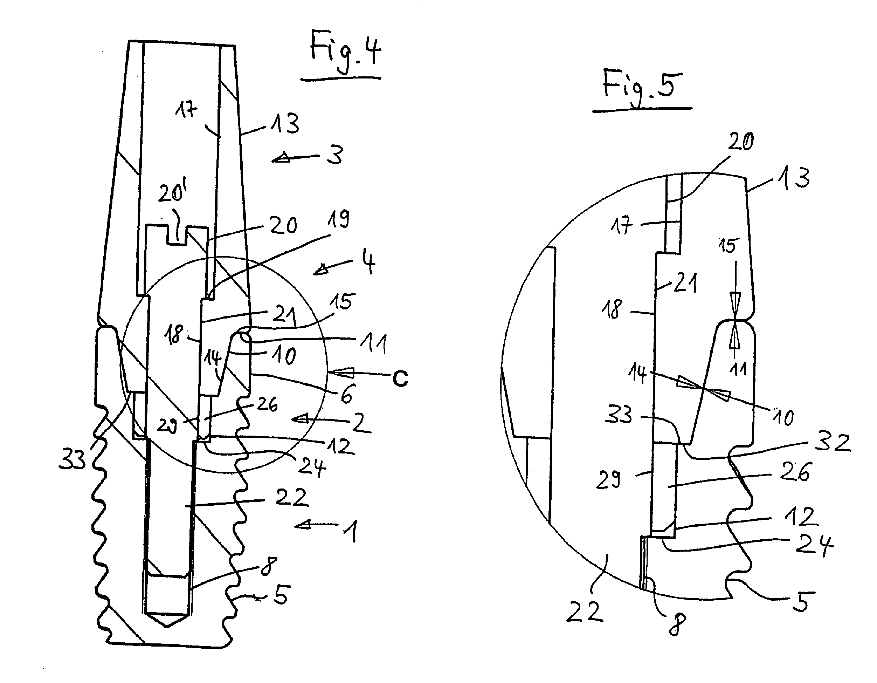

Bei der abgewandelten Ausführungsform nach Fig. 4 und 5 sind Teile, die mit denjenigen der Ausführungsform nach Fig. 1 bis 3 übereinstimmen, mit denselben Bezugszeichen versehen. Diese Teile werden nicht erneut beschrieben.

Zusätzlich zur Ausführungsform nach Fig. 1 bis 3 sind bei der Abwandlung nach Fig. 4 und 5 weitere axiale Anlageflächen vorhanden. Die weitere axiale Anlagefläche 32 der Implantatschraube 1 wird von einem Absatz gebildet, der sich an das untere Ende der konischen Anlagefläche 10 anschließt und der von dort radial nach innen verläuft. Die weitere axiale Anlagefläche 33 des Implantataufbaus 3 wird von der unteren Endfläche des Implantataufbaus 3 gebildet, die sich an das untere Ende der konischen Anlagefläche 14 anschließt und die von dort radial nach innen verläuft.

Die konischen Anlageflächen 10 und 14 werden vorzugsweise so weit gegeneinander eingeschliffen, bis die axialen Anlageflächen 11, 15 und die weiteren axialen Anlageflächen 32, 33 aneinander anliegen und einen Formschluß bilden. Dadurch wird die Spannungsfreiheit und Bakteriendichtheit weiter verbessert.

Bei der Montage des Zahnimplantats wird die Positionierbuchse 2 in die als Innensechskant ausgebildete verdrehsichere Innenfläche 12 der Implantatschraube 1 eingesetzt. Anschließend wird die konische Anlagefläche 14 des Implantatäufbaus 3 an der konischen Anlagefläche 10 der Implantatschraube 1 positioniert. Dabei wird der Implantataufbau 3 derart positioniert, daß der Vorsprung 27 der Positionierbuchse 2 in die Aussparung 30 des Implantataufbaus 3 eindringt und dort zu liegen kommt. Schließlich wird die Spannschraube 4 durch das Durchgangsloch 16 des Implantataufbaus 3 und durch das Durchgangsloch 29 der Positionierbuchse 2 hindurchgesteckt und mit dem Innengewinde 8 der Implantatschraube 1 verschraubt, wodurch die in Fig. 4 und 5 gezeigte, montierte Stellung erreicht wird. Die Implantatschraube 1 und der Implantataufbau 3 sind dann axial und radial aneinander fixiert.

## Patentansprüche

1. Zahnimplantat, umfassend eine Implantatschraube (1) mit einem Außengewinde (5), einen Implantataufbau (3) und eine Spannschraube (4), die in die Implantatschraube (1) einschraubbar ist und durch die der Implantataufbau (3) mit der Implantatschraube (1) verbindbar oder verbunden ist, wobei die Implantatschraube (1) mit einer Anlagefläche (10, 11, 32) an einer Anlagefläche (14, 15, 33) des Implantataufbaus (3) anliegt, wobei die Implantatschraube (1) und der Implantataufbau (3) zumindest im Bereich ihrer Anlageflächen (10, 11, 32; 14, 15, 33) aus einem keramischen Werkstoff hergestellt sind,
**dadurch gekennzeichnet,**
**daß** die Anlagefläche (14, 15, 33) der Implantatschraube (1) und die Anlagefläche (14, 15, 33) des Implantataufbaus (3) gegeneinander eingeschliffen sind.

2. Zahnimplantat nach Anspruch 1, **dadurch gekennzeichnet, daß** die Anlagefläche der Implantatschraube (1) eine konische Anlagefläche (10) und/oder eine axiale Anlagefläche (11) und/oder eine weitere axiale Anlagefläche (32) ist.

3. Zahnimplantat nach Anspruch 1 oder 2, **dadurch gekennzeichnet, daß** die Anlagefläche des Implantataufbaus (3) eine konische Anlagefläche (14) und/oder eine axiale Anlagefläche (15) und/oder eine weitere axiale Anlagefläche (33) ist.

4. Zahnimplantat nach einem der vorhergehenden Ansprüche, **dadurch gekennzeichnet, daß** die axialen Anlageflächen (11, 15; 32, 33) an einem Ende der konischen Anlageflächen (10, 14) vorgesehen sind.

5. Zahnimplantat nach einem der vorhergehenden Ansprüche, **dadurch gekennzeichnet, daß** an beiden Enden der konischen Anlageflächen (10, 14) axiale Anlageflächen (11, 15; 32, 33) vorgesehen sind.

6. Zahnimplantat nach einem der vorhergehenden Ansprüche, **gekennzeichnet durch** eine Positionierbuchse (2), die in der Implantatschraube (1) verdrehsicher lagerbar oder gelagert ist und mit der der Implantataufbau (3) verdrehsicher verbindbar oder verbunden ist.

7. Zahnimplantat nach Anspruch 6, **dadurch gekennzeichnet, daß** die Positionierbuchse (2) eine verdrehsichere Außenfläche (26), insbesondere einen Außensechskant, und die Implantatschraube (1) eine verdrehsichere Innenfläche (12), insbesondere einen Innensechskant, aufweist.

8. Zahnimplantat nach Anspruch 6 oder 7, **dadurch gekennzeichnet, daß** die Positionierbuchse (2) einen Vorsprung (27), insbesondere einen Steg, und der Implantataufbau (3) eine dazu komplementäre Aussparung (30), insbesondere eine Nut, aufweist.

9. Zahnimplantat nach Anspruch 8, **dadurch gekennzeichnet, daß** der Vorsprung (27) bzw. Steg und die Aussparung (30) bzw. Nut konisch ausgeformt sind.

10. Verfahren zur Herstellung eines Zahnimplantats nach einem der vorhergehenden Ansprüche,
**dadurch gekennzeichnet,**
**daß** eine Anlagefläche (10, 11, 32) der Implantatschraube (1) und eine Anlagefläche (14, 15, 33) des Implantataufbaus (3) gegeneinander eingeschliffen werden.

11. Verfahren nach Anspruch 10, **dadurch gekennzeichnet, daß** eine konische Anlagefläche (10) der Implantatschraube (1) und eine konische Anlagefläche (14) des Implantataufbaus (3) gegeneinander eingeschliffen werden und/oder daß eine axiale Anlagefläche (11) der Implantatschraube (1) und eine axiale Anlagefläche (15) des Implantataufbaus (3) gegeneinander eingeschliffen werden und/oder daß eine weitere axiale Anlagefläche (32) der Implantatschraube (1) und eine weitere axiale Anlagefläche (33) des Implantataufbaus (3) gegeneinander eingeschliffen werden.

12. Verfahren nach Anspruch 10 oder 11, **dadurch gekennzeichnet, daß** eine oder mehrere oder alle Anlageflächen (10, 11, 32; 14, 15, 33) so weit gegeneinander eingeschliffen werden, bis sie einen Formschluß bilden.

## Claims

1. A dental implant, comprising an implant screw (1) with an external thread (5), an implant abutment (3) and a tightening screw (4) which can be screwed into the implant screw (1) and by which the implant abutment (3) is connectable or connected with the implant screw (1), wherein the implant screw (1) rests against a contact surface (14, 15, 33) of the implant abutment (3) with a contact surface (10, 11, 32), wherein the implant screw (1) and the implant abutment (3) are made of a ceramic material at least in the region of their contact surfaces (10, 11, 32; 14, 15, 33),
**characterized in**
**that** the contact surface (14, 15, 33) of the implant screw (1) and the contact surface (14, 15, 33) of the implant abutment (3) are ground in against each other.

2. The dental implant according to claim 1, **characterized in that** the contact surface of the implant screw (1) is a conical contact surface (10) and/or an axial contact surface (11) and/or a further axial contact surface (32).

3. The dental implant according to claim 1 or 2, **characterized in that** the contact surface of the implant abutment (3) is a conical contact surface (14) and/or an axial contact surface (15) and/or a further axial contact surface (33).

4. The dental implant according to any of the preceding claims, **characterized in that** the axial contact surfaces (11, 15; 32, 33) are provided at one end of the conical contact surfaces (10, 14).

5. The dental implant according to any of the preceding claims, **characterized in that** at both ends of the conical contact surfaces (10, 14) axial contact surfaces (11, 15; 32, 33) are provided.

6. The dental implant according to any of the preceding claims, **characterized by** a positioning bushing (2) which is non-rotatably mountable or mounted in the implant screw (1) and with which the implant abutment (3) is non-rotatably connectable or connected.

7. The dental implant according to claim 6, **characterized in that** the positioning bushing (2) has a non-rotatable outer surface (26), in particular an external hexagon, and the implant screw (1) has a non-rotatable inner surface (12), in particular an internal hexagon.

8. The dental implant according to claim 6 or 7, **characterized in that** the positioning bushing (2) has a protrusion (27), in particular a web, and the implant abutment (3) has a cutout (30) complementary thereto, in particular a groove.

9. The dental implant according to claim 8, **characterized in that** the protrusion (27) or web and the cutout (30) or groove are formed conically.

10. A method for manufacturing a dental implant according to any of the preceding claims,
**characterized in**
**that** a contact surface (10, 11, 32) of the implant screw (1) and a contact surface (14, 15, 33) of the implant abutment (3) are ground in against each other.

11. The method according to claim 10, **characterized in that** a conical contact surface (10) of the implant screw (1) and a conical contact surface (14) of the implant abutment (3) are ground in against each other and/or that an axial contact surface (11) of the implant screw (1) and an axial contact surface (15) of the implant abutment (3) are ground in against each other and/or that a further axial contact surface (32) of the implant screw (1) and a further axial contact surface (33) of the implant abutment (3) are ground in against each other.

12. The method according to claim 10 or 11, **characterized in that** one or more or all contact surfaces (10, 11, 32; 14, 15, 33) are ground in against each other, until they form a form fit.

## Revendications

1. Implant dentaire, comprenant une vis d'implant (1) avec un filet extérieur (5), un pilier d'implant (3) et une vis de serrage (4) qui peut être vissée dans la vis d'implant (1) et par laquelle le pilier d'implant (3) est ou peut être relié à la vis d'implant (1), la vis d'implant (1) étant adjacente avec une surface d'appui (10, 11, 32) à une surface d'appui (14, 15, 33) du pilier d'implant (3), la vis d'implant (1) et le pilier d'implant (3) étant fabriqués au moins dans la zone de leur surface d'appui (10, 11, 32 ; 14, 15, 33) en une matière céramique,
**caractérisé en ce que**
la surface d'appui (14, 15, 33) de la vis d'implant (1) et la surface d'appui (14, 15, 33) du pilier d'implant (3) sont rodées l'une contre l'autre.

2. Implant dentaire selon la revendication 1, **caractérisé en ce que** la surface d'appui de la vis d'implant (1) est une surface d'appui conique (10) et/ou une surface d'appui axiale (11) et/ou une autre surface d'appui axiale (32).

3. Implant dentaire selon la revendication 1 ou 2, **caractérisé en ce que** la surface d'appui du pilier d'implant (3) est une surface d'appui conique (14) et/ou une surface d'appui axiale (15) et/ou une autre surface d'appui axiale (33).

4. Implant dentaire selon l'une des revendications précédentes, **caractérisé en ce que** les surfaces d'appui axiales (11, 15 ; 32, 33) sont prévues à une extrémité des surfaces d'appui coniques (10, 14).

5. Implant dentaire selon l'une des revendications précédentes, **caractérisé en ce que** des surfaces d'appui axiales (11, 15 ; 32, 33) sont prévues aux deux extrémités des surfaces d'appui coniques (10, 14).

6. Implant dentaire selon l'une des revendications précédentes, **caractérisé par** une bague de positionnement (2) qui est ou peut être montée dans la vis d'implant (1) sans pouvoir tourner et à laquelle le pilier d'implant (3) est ou peut être relié sans pouvoir tourner.

7. Implant dentaire selon la revendication 6, **caractérisé en ce que** la bague de positionnement (2) présente une surface extérieure (26) ne pouvant pas tourner, en particulier un hexagone extérieur, et la vis d'implant (1) une surface intérieure (12) ne pouvant pas tourner, en particulier un hexagone intérieur.

8. Implant dentaire selon la revendication 6 ou 7, **caractérisé en ce que** la bague de positionnement (2) présente une saillie (27), en particulier un talon, et le pilier d'implant (3) un évidement (30) complémentaire de la saillie, en particulier une encoche.

9. Implant dentaire selon la revendication 8, **caractérisé en ce que** la saillie (27) ou le talon et l'évidement (30) ou l'encoche sont façonnés coniques.

10. Procédé de fabrication d'un implant dentaire selon l'une des revendications précédentes,
**caractérisé en ce**
**qu'**une surface d'appui (10, 11, 32) de la vis d'implant (1) et une surface d'appui (14, 15, 33) du pilier d'implant (3) sont rodées l'une contre l'autre.

11. Procédé selon la revendication 10, **caractérisé en ce qu'**une surface d'appui conique (10) de la vis d'implant (1) et une surface d'appui conique (14) du pilier d'implant (3) sont rodées l'une contre l'autre et/ou **en ce qu'**une surface d'appui axiale (11) de la vis d'implant (1) et une surface d'appui axiale (15) du pilier d'implant (3) sont rodées l'une contre l'autre et/ou **en ce qu'**une autre surface d'appui axiale (32) de la vis d'implant (1) et une autre surface d'appui axiale (33) du pilier d'implant (3) sont rodées l'une contre l'autre.

12. Procédé selon la revendication 10 ou 11, **caractérisé en ce qu'**une ou plusieurs ou toutes les surfaces d'appui (10, 11, 32 ; 14, 15, 33) sont rodées les unes contre les autres jusqu'à ce qu'elles forment une liaison par complémentarité de forme.
